# EUROPEAN PATENT APPLICATION

(11) **EP 2 387 035 A1**
(43) Date of publication of application: **16.11.2011**
(21) Application number: 10305494.6
(22) Date of filing: 11.05.2010
(51) Int. Cl.: G11B 7/007, G11B 7/26, H01J 37/317

(54) **Method for mastering grooves on a rotating disc by utilizing an electron beam and recordable disc**

(71) Applicant: Thomson Licensing, 92130 Issy-les-Moulineaux (FR)
(72) Inventor: Przygodda, Frank, 88045 Friedrichshafen (DE); Knappmann, Stephan, 78658 Zimmern ob Rottweil (DE); Krause, Michael, 78050 Villingen-Schwenningen (DE)
(74) Representative: Arnold, Klaus-Peter

(57) **Abstract**

The method for manufacturing of a recordable disc comprises the steps of recording grooves on a rotating disc (D) by using an electron beam (E), the electron beam performing a radial oscillation with a radial amplitude for defining the width of a groove, the grooves being designed for providing tracking information for the recordable disc, wherein a radial amplitude (A_{2T}) is provided for recording at least two grooves (G1, G2) in parallel being separated by a land area (LA). The grooves (G1, G2) have in particular a different width (w1, w2) and the rotating disc is used as a master for the production of recordable discs having grooves with a track pitch being below the diffraction limit of a pickup for recording of data on the recordable discs.

## Description

### TECHNICAL FIELD OF THE INVENTION

The invention relates to a method for mastering a disc by utilizing an electron beam for recording marks along a track of the disc, and to a respective apparatus. The invention relates further to a data disc, in particular to a master disc, manufactured by the method for replicating optical discs.

### BACKGROUND OF THE INVENTION

Optical storage media are media in which data are stored in an optically readable manner by means of a pickup including a laser and an optical detector, for example a photo detector. The detector is used for detecting reflected light of the laser beam when reading data on the storage medium. In the meanwhile a large variety of optical storage media are known, which are operated with different laser wavelength, and which have different sizes for providing storage capacities from below one Gigabyte up to 50 Gigabyte. The formats include read-only formats, write-once optical media as well as rewritable formats. Digital data are stored on these media along tracks in one or more layers of the media.

Optical storage media for write-once or rewritable formats are usually preformatted to allow for tracking and positioning of the pickup even on an empty medium. The preformatted structure consists usually of a spiral-shaped depression or embossment of the recording layer, also called grooves. These grooves allow for a radial tracking signal obtained e.g. by a push-pull method. Furthermore, the media can include preformatted address information in form of so-called pre-pits and/or in form of a radial modulation of the grooves called wobbled grooves.

The storage medium with the highest data capacity is at present the Blu-ray disc (BD), which allows to store up to about 50 GB on a dual layer disc. For reading and writing of a Blu-ray disc a pickup with a laser wavelength of 405 nm and a numerical aperture of 0,85 is used. On the Blu-ray disc a track pitch of 320 nm and a mark length from 2T to 8T or 9T is implemented, where T is the channel bit length and wherein 2T corresponds with a minimum mark length of 138 - 160 nm.

The diffraction limit of optical instruments as described by the Abbe theory is about λ/2NA, which is 238nm for a Blu-ray type pickup having a laser wavelength λ =405nm and a numerical aperture NA=0,85. 238nm represents here the period of the smallest detectable mark frequency, period which is constituted of a pit and of a land of the same length. λ/2NA corresponds also with the focus diameter of the laser beam on the optical disc. By providing a reference level for the high frequency readout signal, very small amplitude changes can be detected in accordance with reflectivity changes due to the pits and lands, which allows to detect with a Blu-ray type pickup pits having a length of about λ/4NA=120nm.

New optical storage media with a super-resolution structure offer the possibility to increase the data density by a factor of two to four in one dimension as compared with the Blu-ray disc. This is possible by including a nonlinear layer, which is placed above the data layer of the optical storage medium, and which significantly reduces the effective size of a light spot used for reading from or writing to the optical storage medium. Therefore, the super-resolution effect allows to record and read data stored in marks of an optical disc, which have a size being below the diffraction limit of λ/4NA in track direction of a corresponding optical pickup. The nonlinear layer is often called a super-resolution near-field structure (Super-RENS) layer because it is assumed that for some specific materials, the optical effect, which reduces the effective spot size of the laser beam, is based on a near-field interaction between the marks and spaces of the data layer and the nonlinear layer.

A further increase in data density can be obtained by reducing the track pitch of the optical disc. In WO 2008/071653 an optical disc is described comprising two spirals having pits of different width, which are interleaved with each other such that the pit width is changing alternatingly between adjacent tracks. The track pitch between the tracks of the two spirals is reduced below the diffraction limit of λ/2NA of a respective pickup for reading of the data, by still providing a push-pull signal for a tracking regulation.

In US 2004/0057158 and EP-A-1347450 electron beam recorders are described for manufacturing a master disc by using an electron beam performing a radial oscillation for recording a pit train along a track of a rotating disc. This radial oscillation of the electron beam is a method for recording structures of a certain width and has to be distinguished from the wobble of a groove of a write-once or recordable format. The latter will be called "wobbled groove" herafter.

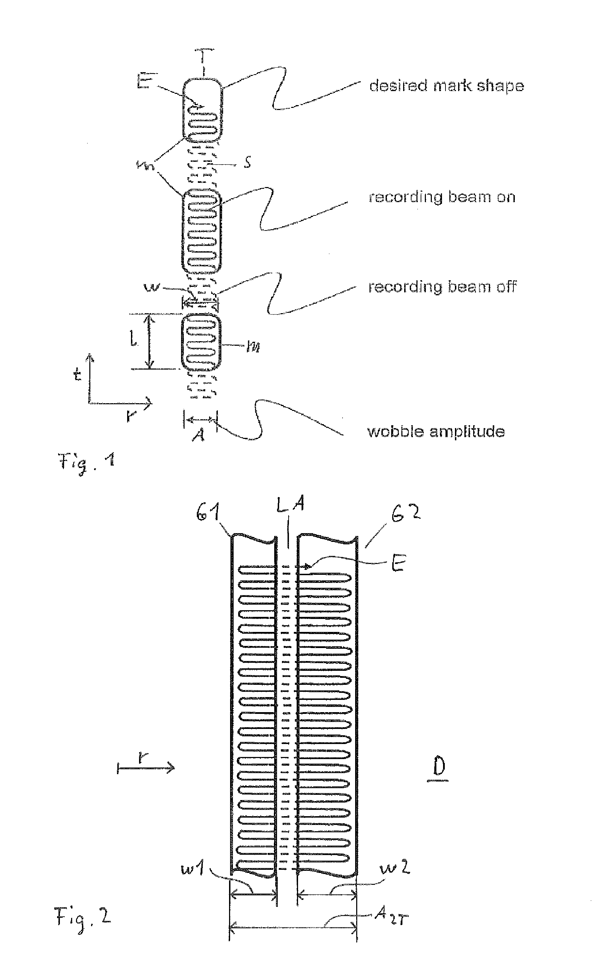

An electron beam recorder allows to record marks or grooves along a track of a rotating disc, as will be described with regard to Fig. 1. The electron beam recorder provides an electron beam E, which has a focus on the disc being much smaller than a mark to be recorded on the disc. To record a mark m having a defined width w and length 1, the electron beam E is wobbled in radial direction r of the disc with a constant radial amplitude A. Due to the rotation of the disc, the electron beam E moves along the disc in track direction t. The length l of the mark m is dependent on the rotating speed of the optical disc and the on-time of the electron beam. For providing a subsequent space s, the electron beam is switched off or its intensity is reduced to a negligible low value. For the next mark m, the electron beam is turned on again.

The electron beam is therefore oscillating periodically between the left and right sides of the marks with a constant radial amplitude A for each oscillation for providing marks with a defined width w. The number of oscillations, during which the electron beam is on and the length of a single oscillation define the length of each mark. The first mark of track T contains for example four and the second mark six oscillations, during which the electron beam is continuously switched on. The length of a recorded single oscillation on the disc is of course dependent on the rotating speed of the disc.

The disc is e.g. a plastic substrate, on which a layer consisting of a resist being sensitive to the electron beam is arranged, a so-called electron beam resist. When recording marks on the resist, the material properties of the resist are modified such, that the marks can be etched away by a respective solvent, e.g. an etching liquid. This kind of resist is called a positive resist. Correspondingly an inverted pattern can be generated by using a negative resist material. The recorded marks on the disc are hence converted into pits, and the disc can be used therefore for manufacturing a stamper for a mass production of read only-optical discs.

### SUMMARY OF THE INVENTION

The method for manufacturing of a recordable disc comprises the steps of recording grooves on a rotating disc by using an electron beam, the electron beam performing a radial oscillation with regard to the rotating disc having a radial amplitude for defining the width of a groove, which grooves are designed for providing tracking information for the recordable disc, wherein a radial amplitude is provided for recording at least two grooves in parallel, which grooves are separated by a land area. The electron beam is in particular switched on during defined time intervals for recording alternatively grooves being separated by the land area. Advantageously, a constant radial feed is provided for the electron beam for each revolution of the rotating disc for recording grooves with a defined track pitch.

The method can be used in particular for recording grooves with a track pitch, which is below a diffraction limit in radial direction of a corresponding pickup for recording data on the recordable disc, to allow recording of data on the recordable disc with high data density. The method is Advantageously suitable for manufacturing of a master, with which stampers can be produced for the production of write-once or recordable super-resolution optical discs comprising grooves having a width being below the diffraction limit of the pickup.

In another aspect of the invention, the electron beam intensity is modulated such, that a first groove has a different shape with regard to an adjacent second groove, e.g. the first and the second grooves have a different width. The method provides in particular a constant radial feed for the electron beam for each revolution of the disc for recording consecutive grooves of defined track pitch, the grooves having alternatingly a different width, so that the tracks recorded on the rotating disc constitute two or more spirals, wherein consecutive grooves have a constant track pitch between each other.

In a preferred embodiment, a constant radial amplitude is provided periodically such, that the electron beam scans always the width of the first and the second grooves and the land area in between both grooves during one radial oscillation.

In a further aspect of the invention, a varying radial amplitude is provided for the electron beam such, that two grooves with a constant width, but a land area having a changing width, which width is changing periodically with regard to defined wobble frequency. Advantageously, also pre-pits can be recorded on the rotating disk for providing address information on the recordable or rewritable optical disk. The electron beam is in particular switched on during defined time intervals for recording alternatively grooves being separated by a land area, wherein consecutive adjacent grooves have alternatingly a different width.

The method can be used in particular for super-resolution recordable or rewritable discs, having a track pitch being below a diffraction limit of a pickup for recording of the data. The data are recorded for example in the grooves but not on the land area. Because of the different widths of adjacent grooves, the tracking regulation of the recorder sees a track pitch, which is twice a track pitch between two adjacent grooves. By this method, therefore a track pitch reduction of about a factor of two can be obtained for increasing the data capacity of the recordable disk by a factor of two.

### BRIEF DESCRIPTION OF THE DRAWINGS

Preferred embodiments of the invention are explained now in more detail below by way of example with reference to schematic drawings, which show:
- Fig. 1: a diagram for explaining a method for recording marks along a track of a rotating disc by using an electron beam according to prior art,
- Fig. 2: a disc in a simplified manner comprising two grooves recorded in parallel at the same time by using an electron beam according to the invention,
- Fig. 3: a second preferred embodiment of a disc according to the invention,
- Fig. 4: a disc according to Fig. 2 comprising a pre-pit within a groove,
- Fig. 5: a disc according to Fig. 2 comprising a pre-pit within a land area,
- Fig. 6: a diagram for explaining a method for recording grooves on a rotating disc according to a further preferred embodiment, and
- Fig. 7: a disc in a simplified manner comprising grooves being arranged as two spirals, wherein two grooves are recorded in parallel at the same time by using an electron beam.

### DETAILED DESCRIPTION OF PREFERRED EMBODIMENTS

A method for recording at the same time two or more grooves in parallel on a rotating disc D for a recordable optical disc is described with regard to Fig. 2. For recording two grooves G1, G2 in parallel on the rotating disc D, a radial amplitude A_{2T} is provided which covers the width w1 of the groove G1, the width w2 of the groove G2 and the width of the land area LA in between both grooves G1, G2. For recording groove G1, the electron beam is switched on over the respective area of the groove G1. The electron beam is switched off during the land area LA in between grooves G1, G2. For recording groove G2, the electron beam is switched on over the respective area of the groove G2.

The groove G1 can have a width w1 being different from the width w2 of the groove G2 by selecting respective on-times of the electron beam during the wobble period A_{2T}. In detail, the on-time during the first part of a complete radial oscillation with radial amplitude A_{2T} defines the width w1 of groove G1 and the on-time during the second part of the radial oscillation with radial amplitude A_{2T} defines the width w2 of groove G2. Alternatively, the electron beam may be reduced in intensity to a sufficiently low value for providing the land areas between the grooves.

The method can be used in particular for providing a master, by means of which stampers can be produced for manufacturing of write-once or rewritable optical discs. The disc D, e.g. a Si-wafer or a glass-substrate, is covered for this application with an electron beam sensitive resist, which is modified on the locations, on which the electron beam records the groove structure on the disc D. The modified locations can be etched away by using a respective etching fluid so that the remaining resist contains a groove at the locations, where the electron beam has recorded on the disc. The disc D is then used as a master disc for producing stampers as known from prior art, for producing substrates having a respective groove structure in accordance with the master disc, which substrates are the basic structures for the production of the write-once or rewritable optical discs.

To provide a very precise geometry of the grooves G1, G2, in particular to ensure sharp borders of the grooves in radial direction r, the electron beam has to be switched on and off very precisely at the edges of each groove. The electron beam intensity has to be switched between full intensity and zero or essentially zero within a very short time, and the rotating speed of the disc and the oscillation frequency of the radial oscillations have to be selected to be sufficiently slow for providing the precise borders. The method as described with regard to Fig. 2 can be used therefore for recording two grooves in parallel at the same time on a rotating disc D, the grooves being separated by a land area, wherein the first groove has a first width and the second groove has a second width being different from the first width. Also, three grooves or more having different widths can be recorded, wherein the width of the grooves is changing alternatingly between the first width, the second width and the third width.

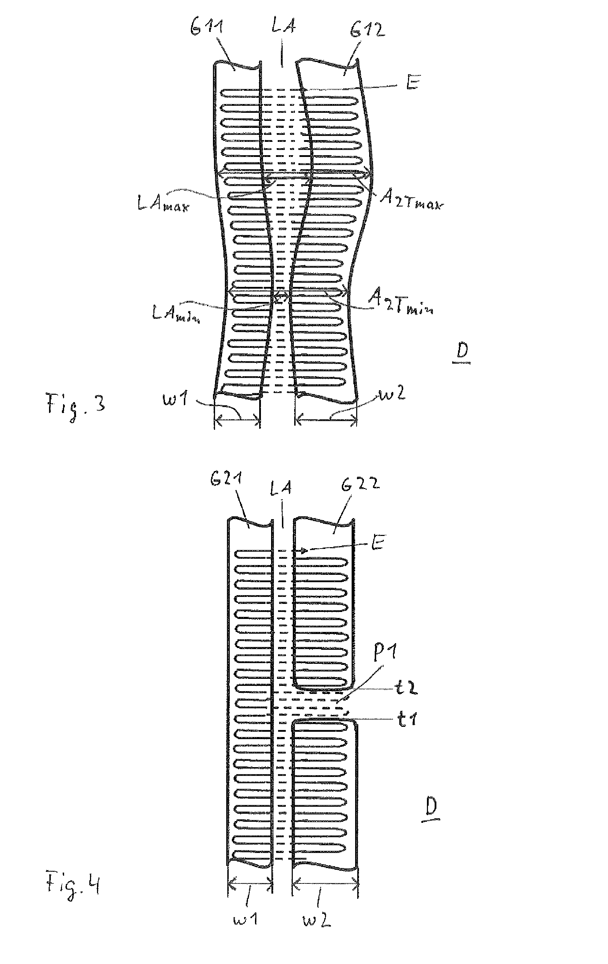

Another preferred embodiment is depicted in Fig. 3 showing a rotating disc D in a simplified manner having a first groove G11 with a constant width w1 and a second groove G12 with a constant width w2 being different from the width w1. In contrast to the embodiment of Fig. 2, the width of the land area LA is changing between a minimum width LAₘᵢₙ and LAₘₐₓ. The width of the land area LA is changing in particular periodically between the minimum and maximum values LAₘᵢₙ and LAₘₐₓ for defining a wobble frequency on the rotating disc D.

A groove structure of this kind can be recorded on the rotating disc D by means of an electron beam recorder, which uses an electron beam E oscillating in radial direction with an amplitude, which is periodically changing between a minimum value A2Tₘᵢₙ and a maximum value A2Tₘₐₓ, and by selecting defined on-times for recording groove G11 having a constant width w1 and groove G12 having a constant width w2 being different from the width w1.

The on-time for recording groove G11 and the on-time for recording groove G12 are always constant for each radial oscillation of the electron beam E, to provide groove G11 with a constant width w1 and groove G12 with a constant width w2. But because the radial amplitude of the electron beam E is oscillating between the minimum amplitude A2Tₘᵢₙ and the maximum amplitude A2Tₘₐₓ, the land areas LA is provided with a width, which is changing periodically between the minimum width LAₘᵢₙ and the maximum width LAₘᵢₙ. Because the on-time of the electron beam is always constant for recording the grooves G11, G12, the off-time defining the width of the land area LA is varying.

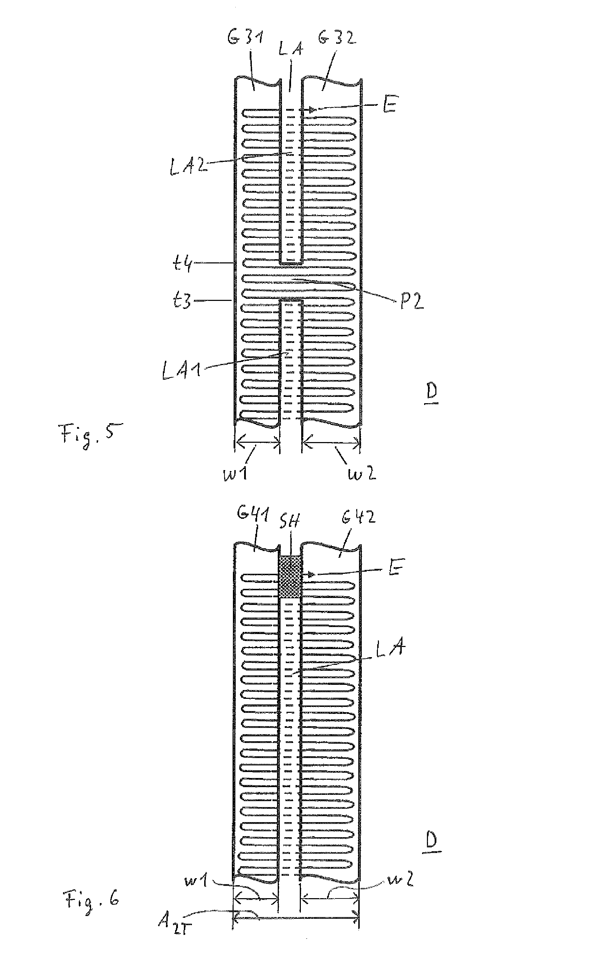

The method as described with regard to Fig. 2 can be used also for recording grooves with pre-pits, as shown in Figs. 4 and 5. Fig. 4 depicts two grooves, groove G21 having a width w1 and a groove G22 having a width w2, and a land area LA, similar to grooves G1, G2 of Fig. 2. The groove G22 contains in this embodiment a pre-pit P1, which is provided as an interruption of the groove G22. The pre-pit P1 can be easily provided by switching the electron beam E off during time interval t1, t2, at the location corresponding with the pre-pit P1 of groove G22.

Fig. 5 shows a first groove G31 having a width w1 and a second groove G32 having a width w2, in accordance with grooves G1, G2 of Fig. 2, and a land area LA. The land area LA contains a pre-pit P2, which is provided as an interruption of the land area LA. The pre-pit P2 can be provided by electron beam recording, when keeping on the electron beam E during a time interval t3, t4. The area corresponding with the pre-pit P2 is marked therefore by the electron beam, so that in this area in a later step a groove is provided having the same depth as the grooves G31, G32. The land area LA comprises therefore a section LA1 and a section LA2 being separated by pre-pit P2.

The wobble oscillation of the land area as described with regard to Fig. 3 and the pre-pits P1, P2 in accordance with Figs. 4 and 5 may be used for providing address information on a recordable or rewriteable optical disc, as known from prior art.

For providing sharp boarders for the grooves, an apparatus providing an electron beam for electron beam recording comprises in a preferred embodiment a beam blocking element in the electron beam path within the apparatus, which blocks the land area LA on the rotating disc D for the electrons between grooves G41, G42, as shown in Fig. 6. The beam blocking element provides a shadow SH on the disc D for the electrons, which shadow corresponds with the land area LA, when the disc D is rotating. Alternatively, the beam blocking element can be placed in a conjugated plane of the electron beam recorder where the electrons are focused before reaching the disc surface ("conjugate focal plane").

The electron beam E therefore has not to be switched off exactly at the right border of groove G41, when recording groove G41, but can be switched off a little bit later because of the shadow SH provided by the beam blocking element for the land area LA. The electron beam E provides in the embodiment of Fig. 6 a constant radial amplitude A_{2T} covering the width of both grooves G41, G42, as described with regard to Fig. 2. Correspondingly, when the electron beam is coming from the right side from the land area LA, the electron beam can be switched on a little bit earlier, to provide full beam intensity at the beginning of the left border of the groove G42.

As an alternative, the electron beam E may not be switched off when passing from groove G41 to groove G42 during an oscillation period of the electron beam due to the beam blocking element. This has the advantage that the electron beam E can be constantly kept on during recording of the grooves G41, G42.

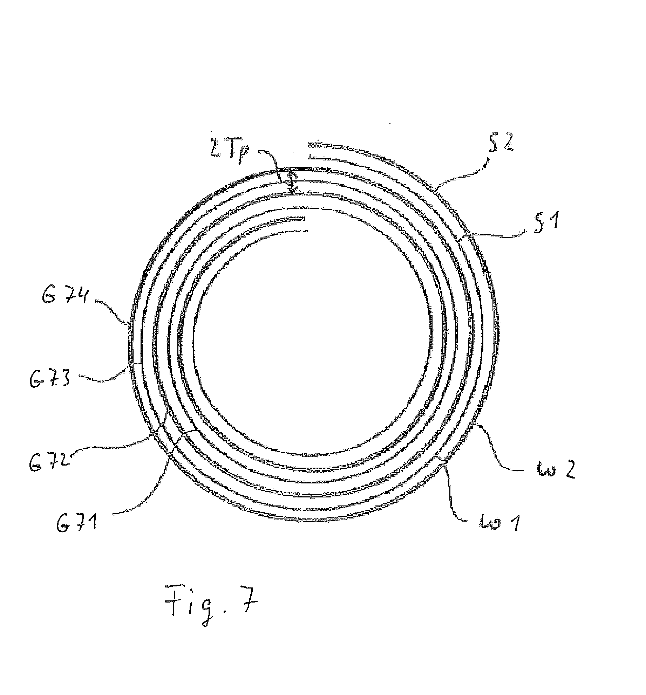

In a further aspect of the invention, the electron beam recording is used for for recording two grooves being arranged as two spirals on a disc, the two grooves being different in width. As shown in Fig. 7, consecutive tracks G71-G74 being arranged as two spirals S1 S2 are recorded. The electron beam is movable in radial direction of the disc D, providing a constant radial feed 2Tp for defining a constant track pitch Tp between adjacent grooves. The electron beam recorder starts for example at an inner location of the rotating disc D and provides a constant radial feed for the electron beam in the direction of the outside of the disc, until the useful area of the optical disc is completely recorded with grooves.

The track pitch Tp between consecutive tracks is therefore defined by the distance, which the electron beam is moved along the radial direction during one revolution of the disc. The electron beam records for example at the same time groove G71 with a width w1 and groove G72 with a width w2. In the next step, groove G73 with width w1 and groove G74 with width w2 are recorded, and so on, grooves G71, G73 constituting spiral S1 and grooves G72, G74 constituting spiral S2.

By controlling the on/off ratio of the electron beam, therefore two spirals S1, S2 having grooves of different width, as shown in Fig. 7, can be recorded therefore very precisely on the rotating disc, by selecting for the electron beam a constant radial feed of 2Tp per revolution. The described method allows therefore to produce a master disc having two or more spirals interleaved within each other, by providing a respective control of the electron beam of an electron beam recorder. In particular no special adjustment of the disc or any other means is necessary to align the second spiral within the first spiral.

The method can be used in particular for manufacturing groove structures for write-once or recordable high data capacity optical discs comprising a nonlinear layer, e.g. a Super-RENS layer, including a data layer with spirals having a track pitch being below the diffraction limit in radial direction of a respective pickup for reading of the data. But other applications for e.g. manufacturing of Blu-ray discs or any other optical discs are also possible. The invention resides therefore in the claims herein after appended.

## Claims

1. Method for manufacturing of a recordable disc, comprising the steps of
recording grooves on a rotating disc (D) by using an electron beam (E), the electron beam performing a radial oscillation with a radial amplitude for defining the width of a groove, the grooves being designed for providing tracking information for the recordable disc, wherein
a radial amplitude (A_{2T}) is provided for recording at least two grooves (G1, G2) in parallel being separated by a land area (LA).

2. The method of claim 1, comprising the step of providing a constant radial feed (2Tp) for the electron beam for each revolution of the disc for recording grooves with a defined track pitch (Tp).

3. The method of claim 1 or 2, comprising the step of switching on the electron beam during defined time intervals for recording grooves (G1, G2) being different in width (w1, w2).

4. The method of claim 1, 2 or 3, comprising the step of providing a constant radial feed (2Tp) for recording grooves (G71-G74) being arranged as two spirals (S1, S2), each groove having a constant width.

5. The method of claim 4, wherein a constant radial amplitude (A_{2T}) is provided for covering the width (w1, w2) of the first and the second groove (G1, G2) and the land area (LA) in between both grooves (G1, G2).

6. The method of claim 4, wherein an oscillating amplitude (A_{2T}) is provided covering the width (w1, w2) of the first and the second groove (G11, G12) and the land area (LA) in between both grooves (G11, G12), wherein the land area (LA) has a varying width and the first groove (G11) a first constant width (w1) and the second groove (G12) a second constant width (w2) being different from the first width (w1).

7. The method of one of the preceding claims, comprising the step of switching off the electron beam (E) during defined time periods (t1-t2) for recording pre-pits (P1) designed as land areas along a groove (G22).

8. The method of one of the preceding claims, comprising the step of keeping on the electron beam (E) during defined time periods (t3-t4), when passing the land area (LA) for recording pre-pits (P2) designed as an interruption along a land area.

9. The method of one of the preceding claims, wherein a beam blocking element is used within the electron beam recorder for blocking the electron beam (E), when passing over the land area (LA).

10. The method of one of the preceding claims, comprising the step of using the rotating disc (D) as a master for the production of recordable or rewritable optical discs.

11. The method of claim 10, comprising the step of recording at least two grooves (G71-G74) having a track pitch (TP) being below the diffraction limit of λ/2NA of a pickup for recording of data on the optical discs.

12. The method of one of the preceding claims, comprising the step of etching the recorded grooves away when the recording of data is finished on the rotating disc and using the rotating disc for producing a master disc for a manufacturing of write-once or recordable optical discs.

13. Recordable data disc manufactured by using a master disc produced by a method according to one of the preceding claims.

14. The recordable data disc of claim 13, having a track pitch between adjacent grooves being below the diffraction limit of λ/2NA of a pickup for recording of data on the disc.

15. The recordable data disc of claim 13 or 14, comprising a super-resolution layer for recording of data with a high data density.
